Europäisches Patentamt

European Patent Office

Office européen des brevets

(19)

(11) Publication number: **0 183 437**
**A2**

(12) **EUROPEAN PATENT APPLICATION**

(21) Application number: **85308268.3**

(22) Date of filing: **13.11.85**

(51) Int. Cl.⁴: **A 61 C 1/14**

(30) Priority: **21.11.84 US 673822**

(43) Date of publication of application:
**04.06.86 Bulletin 86/23**

(84) Designated Contracting States:
**DE FR GB**

(71) Applicant: **SYBRON CORPORATION**
**1100 Midtown Tower**
**Rochester, NY 14604(US)**

(72) Inventor: **Maizenberg, Leonid I.**
**6612 North California Avenue (2N)**
**Chicago Illinois 60645(US)**

(74) Representative: **Oliver, Roy Edward et al,**
**POLLAK MERCER & TENCH High Holborn House 52-54**
**High Holborn**
**London WC1V 6RY(GB)**

(54) **Dental handpiece bur gripping mechanisms.**

(57) A dental handpiece head (2) has a bur-gripping mechanism which includes a spring-loaded ball carrier (22) urged by the spring (24) into operative engagement with a tapered ramp (36) which in turn forces several balls (32) into clamping engagement with the shank (18) of a dental bur positioned in the central bore (16) of the ball carrier (22). Downward force applied to the ball carrier (22) against the spring (24), by a cam lever (38) or by a pushbutton, releases the engagement.

EP 0 183 437 A2

./...

Croydon Printing Company Ltd.

FIG. 1

The present invention is directed to a bur-gripping mechanism for use in a high-speed dental handpiece.  Various systems are known and are commonly used for releasably holding dental burs in place.  They include collet chucks, both of the pushout and drawback types, and spring grip chucks.

According to the present invention, a head for a dental handpiece is characterised in that a rotor tube disposed for rotation within the handpiece head has an inner ramp surface in its upper portion and inner spring support means at a lower portion, a spring is disposed within the rotor tube on the spring support means, a grip carrier is disposed within the rotor tube on the spring and has a plurality of gripping elements around its periphery, the rotor tube and the grip carrier surrounding an axial bore for the reception of a bur shank, and means are provided for transmitting an externally-applied force to move the grip carrier axially against the spring and relative to the ramp surface to an open position, whereby, on release of such externally-applied force, the spring moves the grip carrier relative to the ramp surface to a closed position in which the gripping elements are urged into engagement with the bur shank in the bore.

In dental equipment embodying the construction of the present invention, the traditional chuck is eliminated, in favour of a ball-type gripping mechanism providing a positive gripping engagement with the shank of a dental bur.  Gripping balls are carried in a ball carrier, which surrounds the bur shank and is seated on a spring which urges the ball carrier and its entrained balls into operative engagement with the inner wall of a conical or tapered ramp, which surrounds the ball carrier and which in turn forces the balls inwardly against the bur shank. The balls indent the softer material of the bur shank so as to make positive engagement. An externally-applied force on the ball carrier against the spring releases the balls from engagement with the bur shank.

In order that the invention may be readily understood, preferred embodiments of a dental handpiece are described below in conjunction with the accompanying drawings, in which:

Figure 1 shows a side elevational view, partly in section, of the head of a dental handpiece incorporating the present invention;

Figure 2 shows a sectional view of a ball carrier, forming one of the components of the apparatus of Figure 1;

Figure 3 shows an axial section along the line III-III of Figure 2;

Figure 4 shows a sectional view of a bushing, forming one of the components of the apparatus of Figure 1;

Figure 5 shows a sectional view of a cap in an alternative embodiment of the apparatus of the invention;

Figure 6 shows a top view of the cap of Figure 5;

Figure 7 shows a bottom view of the lever housing of Figure 1.

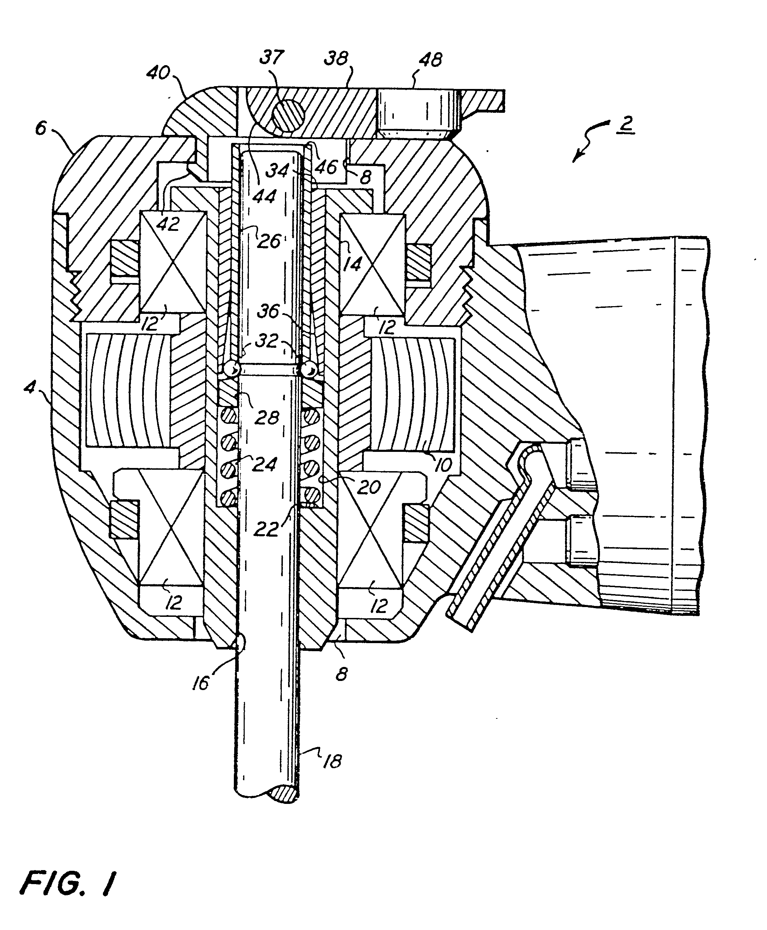

Referring to Figure 1, the head portion of a dental handpiece is generally indicated at 2 and includes a housing 4 into which a cap 6 is threaded. The housing 4 and the cap 6 together form an internal cavity having top and bottom axial apertures 8. An air turbine 10 is rotatably mounted on bearings 12 which are in turn mounted within the cavity in the housing 4 and the cap 6, all of which is well known in the art.

A flanged cylindrical bur tube or rotor tube 14 is fixed to the turbine rotor 10 and is rotatably mounted within the bearings 12. The bur tube 14 has an axial bore 16 through it, into which the shank of a dental bur 18 is slidable. At the lower portion of the bur tube 14, the bore 16 is of a pilot diameter into which the bur 18 fits freely but closely. The upper portion of the bur tube 14 is counterbored at 20 to a larger diameter, the counterbore 20 providing an internal circumferential shoulder 22. A helical compression spring 24 is seated on the shoulder 22.

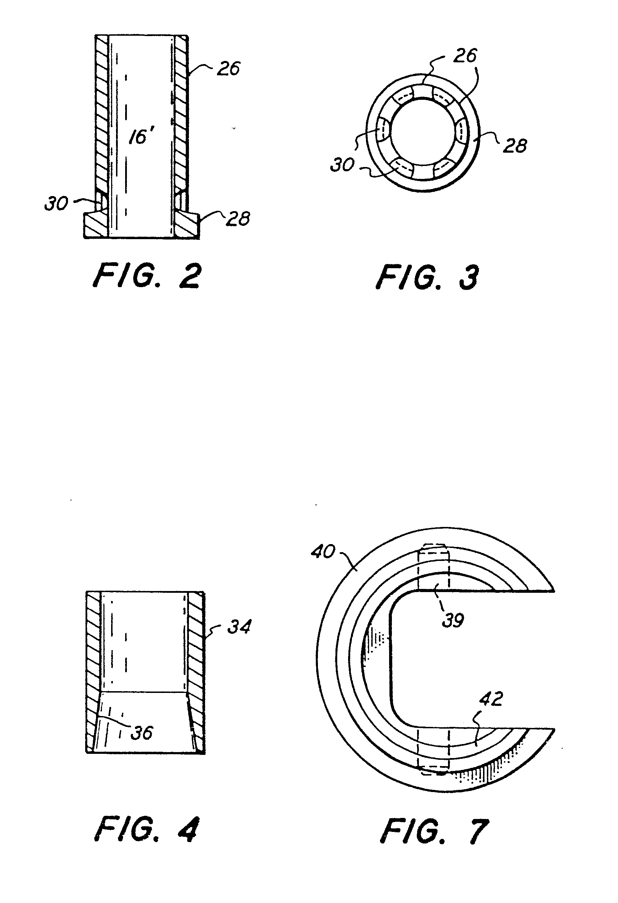

An open cylindrical ball carrier 26 (see also Figures 2 and 3), including a lower flange 28, has an internal bore 16' of generally the same inside diameter as the pilot diameter of the bore 16 of the bur tube 14. The ball carrier 26, by means of its lower flange 28, is seated on top of the compression spring 24 and a number of wall openings 30 are disposed around its circumference above the flange 28, for holding a ball 32 in each one. The openings 30 are conically shaped so that the balls 32 can extend through the wall of the carrier 26, but cannot pass through it. Accordingly, the balls 32 are trapped in their individual openings 30 by the surrounding bur tube 14.

A bushing member 34 (see also Figure 4) has an outer cylindrical surfce which is a press fit in the upper portion of the bur tube 14. The inner surface of the bushing 34 is conical or tapered (opening downwardly), to an intermediate point, from which the inner surface is then cylindrical. The tapered inner surface 36 provides a ramp for the balls 32.

-4-

In Figure 1, in the relative positions of the ball carrier 26 and the bushing 34 (or ramp 36) shown, the spring 24 is in compression and pushes upwards on the flange 28 of the ball carrier 26. The flange 28 also serves to keep the ball carrier 26 centered within the counterbore 20. The several balls 32 are forced inwardly by the tapered ramp 36 so as to engage the shank of the dental bur 18. The balls 32 not only engage the bur shank 18, but also make indentations (not shown) in it, creating a positive bite engagement with the shank and securely holding the bur 18. The balls 32 and the bushing 34 (ramp 36) are of harder material than the bur shank 18 and therefore are able to make such impressions or indentations in the shank 18.

From the position shown in Figure 1, in which the bur 18 is secured, downward displacement of the ball carrier 26 relative to the bushing 34 and ramp 36 (i.e. pushing the ball carrier 26 down against the spring 24) releases the balls 32 from engagement with the bur shank 18, which is then easily removable from the bur tube 14.

One convenient and effective means for moving the ball carrier 26 downward against the spring 24, for releasing the bur shank 18 or for permitting insertion of the bur shank, is shown in Figure 1. A cam lever 38 is pivotally mounted on a lever housing 40 by means of a pin 37 located within holes 39 in the housing 40. The lever housing 40 includes a dependent resilient flange 42 for snap engagement within the top opening 8 of the cap 6. The housing 40 and the flange 42, as shown in Figure 7, are C-shaped, so as to be resilient for snap engagement within the cap opening 8. The cam lever 38 includes a cam surface 44 which, when the lever 38 is raised, bears on the top end face 46 of the ball carrier 26 and moves it downward. The width of the cam lever 38 and its cam surface (that is, its dimension in the direction toward and away from the viewer) is such that the cam surface 44 contacts the end face 46 of the ball carrier 26 when the cam is in use. The lever 38 includes a magnet 48 to hold the lever 38 in a fixed closed position on the cap 6 when it is not in use.

The snap fit of the lever housing 40 within the top opening of the cap 6 permits the housing 40 to be rotated on the cap 6 in order to orient the cam lever 38 into a position most convenient to the user. The lever housing 40 is not loose or freely rotatable, but rather is a snug fit and is rotatable to a desired position, where it will remain unless moved intentionally.

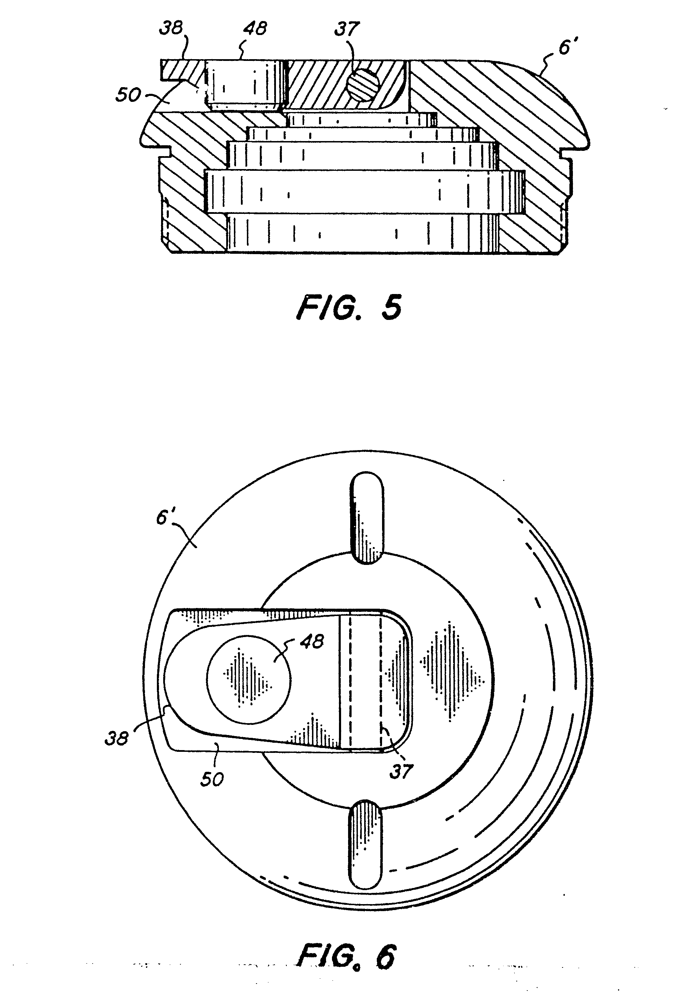

Figures 5 and 6 show another form of the cap 6 and the cam lever 38 of an apparatus of this invention. In the Figure 1 arrangement, the cam lever 38 is mounted in its own housing 40, which is in turn rotatably mounted on the cap 6. In the arrangement of Figures 5 and 6, the cam lever 38 is directly housed in the cap 6' and seats in a recess 50 in the cap. In this arrangement, the cam lever 38 is not rotatable about the axis of the cap 6 as it is in Figure 1, but the overall height of the head 2 is reduced by the absence of the separate lever housing 40 of Figure 1. This is a more compact arrangement, although the rotatable cam lever arrangement of Figure 1 is currently preferred.

In order to prevent contact between the high-speed rotating ball carrier 26 and the stationary cam lever 38, a small clearance is provided between the end face 46 of the ball carrier 26 and the cam lever 38 when the latter is in its down position.

An advantage of using a cam lever, in addition to the mechanical advantage it affords, is that it can be left in its raised position (in which the bur gripping mechanism is open) where it will remain, without being held, while the user removes a bur, selects and inserts another one, and so on. Accordingly, a cam lever is the preferred means for actuating this mechanism. However, it is possible to use a straightforward push button on the top of the cap, by which thumb-applied force is transmitted to the ball carrier to push it down. A push button may also be desirable for reasons of economy.

The preferred gripping elements in this device are the balls 32. However, it is contemplated that other gripping elements might be used. Cylindrical elements are one example.

CLAIMS

1. A head for a dental handpiece, characterized in that a rotor tube (14) disposed for rotation within the handpiece head (7) has an inner ramp surface (36) in its upper portion and inner spring support means (22) at a lower portion, a spring (24) is disposed within the rotor tube (14) on the spring support means (22), a grip carrier (26) is disposed within the rotor tube (14) on the spring (24) and has a plurality of gripping elements (32) around its periphery, the rotor tube (14) and the grip carrier (26) surrounding an axial bore (16) for the reception of a bur shank (18), and means (38) are provided for transmitting an externally-applied force to move the grip carrier (26) axially against the spring (24) and relative to the ramp surface (36) to an open position, whereby, on release of such externally-applied force, the spring (24) moves the grip carrier (26) relative to the ramp surface (36) to a closed position in which the gripping elements (32) are urged into engagement with the bur shank (18) in the bore (16).

2. A head device according to claim 1, in which the grip carrier (26) is a ball carrier and the gripping elements (32) are balls.

3. A head device according to claim 2, in which the ball carrier (26) defines around its periphery a plurality of wall openings (30) which are tapered and smaller at their inner ends than the diameter of the balls (32), whereby escape of the balls (32) from the head device is prevented.

4. A head device according to claim 1, 2 or 3, in which the spring (24) is supported upon an inner circumferential shoulder (22) at a lower portion of the rotor tube (14).

5. A head device according to any of claims 1 to 4, in which the force-transmitting means (38) comprise a cam lever (38) pivotally mounted on the head (2), in operative relationship with the grip carrier (26), so as to be movable to an open position to move the grip carrier (26) against the spring (24) and to a closed position to return the grip carrier (26) under the influence of the spring (24) into operative engagement with the ramp surface (36).

6. A head device according to claim 5, in which the cam lever (38) is rotatably movable about the axis of the head (2), so that it can assume an orientation relative to the handpiece to suit the convenience of the user.

7. A head device according to claim 4 or 5, in which the cam lever (38) is recessed within the head (2) so as to be generally flush with its top.

8. A head device according to any of claims 5 to 7, in which safety means are provided for holding the cam lever (38) in its closed position.

9. A head device according to claim 8, in which the safety means comprise a magnet (48) mounted in the cam lever (38) for engagement with the head (2).

10. A head device according to any preceding claim, in which the gripping elements positively engage the bur shank (18) by forming indentations therein.

0183437

FIG. 1

0183437

FIG. 2

FIG. 3

FIG. 4

FIG. 7

0183437

FIG. 5

FIG. 6